# EUROPEAN PATENT SPECIFICATION

(11) **EP 0 304 283 B1**
(45) Date of publication and mention of the grant of the patent: **27.10.1993**
(21) Application number: 88307619.2
(22) Date of filing: 17.08.1988
(51) Int. Cl.: G01N 11/00

(54) **Apparatus for measuring a characteristic of a liquid**
Gerät zum Messen einer Eigenschaft einer Flüssigkeit
Appareil pour mesurer une caractéristique d'un liquide

(30) Priority: 19.08.1987 JP 205747/87; 19.08.1987 JP 205748/87; 19.08.1987 JP 205749/87; 27.08.1987 JP 213591/87; 10.05.1988 JP 112961/88
(43) Date of publication of application: 22.02.1989
(73) Proprietor: SEIKO INSTRUMENTS INC., Tokyo 136 (JP)
(72) Inventor: Muramatsu, Hiroshi, Koto-ku Tokyo (JP); Karube, Isao, Koto-ku Tokyo (JP)
(74) Representative: Miller, Joseph

(56) References cited:
- EP-A- 0 214 366
- FR-A- 1 484 967
- FR-A- 2 535 346
- GB-A- 851 621
- GB-A- 2 004 376
- GB-A- 2 124 767
- US-A- 3 903 732

## Description

The present invention relates to a method of measuring the viscosity of a liquid, e.g. a liquid used in the field of chemistry, physical chemistry, biochemistry, foodstuffs, medical services and the chemical industry.

A capillary method, a rotational method, and a falling ball method are the principal methods which have been employed previously to measure viscosity. The capillary method measures the viscosity of a liquid sample from the reduction of the speed of the sample in a capillary. The falling ball method places a metal ball into a liquid sample and determines the viscosity of the liquid sample from the speed of fall of the ball in the liquid sample. The rotational method rotates a cylindrical metal rod which is immersed in a sample liquid and determines the viscosity by measuring the shear stress.

The known viscosity measuring methods have the disadvantage that measurement is not possible for a limited amount of a sample. The capillary method and the falling ball methods also stiffer from the problem that a long measuring time and a great deal of labour are necessary to effect a measurement. Since the measurement is carried out by mechanical means in the case of the rotational method, this method has the disadvantages that the measurement is likely to be affected by external influences such as vibration and that the said mechanical means requires maintenance.

Furthermore, in order to measure a gelation reaction, particularly a gelation reaction in the analysis of a blood coagulation system, it is known to employ a method which measures the optical turbidity of a sample, and it is also known to employ a method which applies mechanical vibration and detects a visco-elastic change due to the gelation reaction.

The known optical method which measures turbidity has the disadvantage that measurement of a coloured sample cannot be made and, since an optical measuring system is used, construction of the apparatus is complicated. Furthermore, the known optical method is not considered to be a correct method because it does not measure gelation directly.

The method which applies mechanical vibration also has problems since it involves the use of mechanical parts, and is therefore complicated and liable to give trouble. The gelation reaction is likely to be impeded in this method by mechanical vibration and there is a limit to the range of gelation reactions which can be measured by this method.

In addition to these problems, all of the methods described above involve in common the problem that it is necessary to have at least about 0.2 mℓ of the sample to be tested.

Moreover, a viscosity measuring method involving the use of a torsionally vibrating crystal has also been developed. In the case of the method involving the use of a torsionally vibrating crystal, however, a certain amount of sample is necessary and the viscosity cannot be measured in the case of an electrolytic solution. Furthermore, this method has not been used to measure a chance in the viscosity.

From US-3 903 732 a viscosimeter and densitometer apparatus is known. The technical features of the preamble of claim 1 of the present invention are taken, in combination, from this document.

According to the present invention, there is provided a method of measuring the viscosity of a liquid comprising employing a piezo-electric resonator to produce a response which is related to the said viscosity of the liquid; and employing calculation means to calculate the said viscosity of the liquid from the said response characterised in that the progress of a gelation reaction in the said liquid which involves a viscoelastic change is determined by contacting the resonator with the liquid, adding solid particles to the liquid to amplify a variation of a resonator characteristic which varies in accordance with gelation of the liquid, and monitoring the resonant frequency shift from the resonant frequency measured in air while allowing the gelation reaction to proceed.

The solid particles may be alumina particles.

The resistance of an electrical equivalent circuit of the piezo-electric resonator may be monitored while allowing the chemical reaction to proceed.

The contacting step may comprise contacting the piezo-electric resonator with a liquid comprised of a mixture of aqueous thrombin solution and aqueous fibrinogen solution to thereby enable a determination of fibrinogen concentration by galating with thrombin.

The contacting step may alternatively comprise contacting the piezo-electric resonator with a liquid comprised of a mixture of limulus amebocyte lysate and endotoxin to thereby enable a determination of endotoxin concentration by gelation of limulus amebocyte lysate.

The invention is illustrated, merely by way of example, in the accompanying drawings, in which:-
Figures 1A and 1B are schematic diagrams of two embodiments of a viscosity measuring apparatus in accordance with the present invention;
Figure 2 is a graph showing the relationship between ΔF and √ρ̅η̅ of a water glycerol mixture which can be measured by a viscosity measuring apparatus in accordance with the present invention;
Figures 3A and 3B are diagrams of two further embodiments of a viscosity measuring apparatus in accordance with the present invention;
Figure 4 is a graph showing the relationship between ΔF and √ρ̅η̅ of a water-methanol mixture which can be measured by a viscosity measuring apparatus in accordance with the present invention;
Figure 5 is an equivalent circuit diagram of a piezo-electric resonator;
Figure 6 is a graph showing the relationship between the resistance Ro and √ρ̅η̅ a water-glycerol mixture which can be measured by a viscosity measuring apparatus in accordance with the present invention.

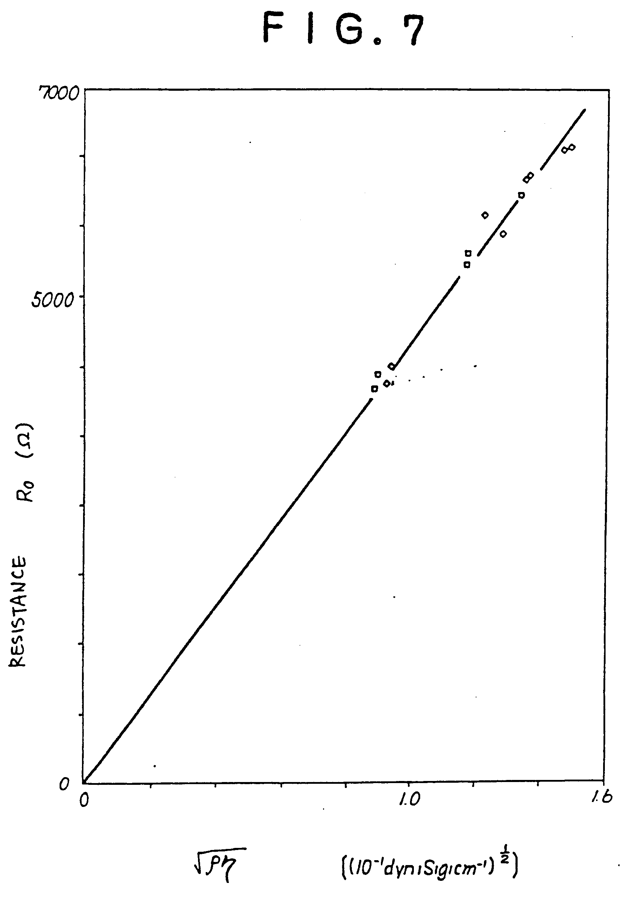

Figure 7 is a graph showing the relationship between the resistance Ro and √ρ̅η̅ of a water-ethanol mixture which can be measured by a viscosity measuring apparatus in accordance with the present invention;
Figure 8A is a graph which shows a deficit resistance of a liquid with respect to a reaction time therein;
Figure 8B is a graph which shows a resonant frequency change of a resonator with respect to the reaction time of a chemical reaction;
Figure 9 is a graph which shows the relationship between an endotoxin concentration and a gelation time;
Figure 10 shows the value of the deficit resistance after the gelation with respect to the said endotox in concentration;
Figure 11 is a schematic diagram of a gelation reaction measuring apparatus in accordance with the present invention;
Figure 12 is a graph showing the change in an oscillator frequency at the time of the gelation reaction of fibrinogen; and
Figure 13 is a graph showing the relationship between a fibrinogen concentration and a gelation time.

In the embodiments described below, a resonant frequency shift which indicates a shift from the resonant frequency of a piezo-electrics oscillator measured in air, or of a resistance included in an equivalent circuit of the piezo-electric resonator,is used as an index of the viscosity of a liquid in contact with the oscillator.

In a viscosity measuring system employed in carrying out the present invention, the viscosity of a liquid is measured by bringing the liquid into contact with one, or both, of two electrodes of a piezo-electric resonator 1, measuring the resonant frequency of the piezo-electric resonator 1 while in contact with the liquid, and determining the difference between the said resonant frequency and of the piezo-electric resonator 1 in air. This viscosity measuring system comprises the piezo-electric resonator 1, a cell 2 or 3 for holding a liquid which contacts the surface of the piezo-electric resonator 1, a measuring circuit constituted by an impedance analyzer 4, for measuring the impedance at frequencies near the resonant frequency of the piezo-electric resonator 1, a calculation unit or computer 5 for calculating the resonant frequency from the measured data, and a data display/recording device 7. This system makes it possible to measure the viscosity of even a small amount of a liquid sample within a short period and with a high level of accuracy.

Viscosity measurement by the present system is carried out in the following sequence.

First, a liquid sample is introduced into the cell 2 or 3 and is brought into contact with the piezo-electric resonator 1. The impedance of this piezo-electric resonator 1 is measured within a frequency range on both sides of the resonant frequency. At this time, if conductance and susceptance, as the real and imaginary components of the admittance which is the inverse number of the impedance, are plotted on X-Y axes, they describe a circle. When the centre of this circle is determined by the least square method, the susceptance has a value which is in agreement with the susceptance value at this centre at a frequency at which the conductance reaches a maximum. Therefore, the resonant frequency can be determined by approximation to a polynomial equation of the susceptance and the measuring frequency. Assuming that the difference of the resonant frequency of the resonator 1 at this time from its resonant frequency in air is ΔF, this value has a linear relationship with √ρ̅η̅ (ρ : density, η : viscosity) of the liquid sample, so that the viscosity of the liquid sample can be determined by utilizing this relationship.

The properties of the piezo-electric resonator 1 and the operation of the resonator 1 in the present analyzer are illustrated as follows.

The piezo-electric resonator 1 may be constituted by a quartz or other crystal resonator or other device having a piezo-electric property. When a voltage of a frequency near the resonant frequency is applied to it, the piezo-electric resonator 1 causes mechanical vibration of the liquid sample. Though this vibration is extremely small, a shear stress is developed between the liquid and the surface of the piezo-electric resonator 1 when the piezo-electric resonator 1 is in contact with the liquid. Since this force is believed to be in equilibrium with the force of the piezo-electric resonator 1 vibrating as an elastic material, the difference ΔF of the resonant frequency when there is no liquid in contact with the piezo-electric resonator 1 and when the piezo-electric resonator 1 is in contact with the liquid may be shown to correspond to √ρ̅η̅. Therefore, the value of √ρ̅η̅ of the sample liquid can be determined from a working curve that has been prepared in advance by determining the ΔF value.

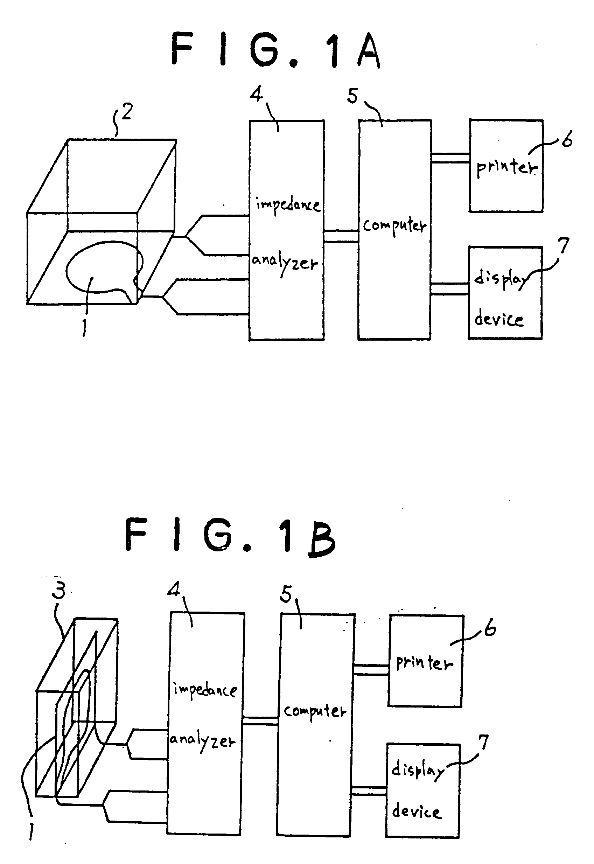

Figures 1A and 1B show schematically the viscosity measuring system in accordance with the present Example. As shown in Figure 1A, the piezo-electric crystal constituting the resonator 1 is fixed to the bottom of the cell 2 so that one of the sides of the piezo-electric crystal 1 is in contact with a liquid in the cell 2. ALternatively, as shown in Figure 1B, the resonator 1 may be mounted in the middle of the cell 3 so that opposite sides of the resonator 1 are in contact with the liquid in the cell 3.

The piezo-electric resonator 1 in either the Figure 1A or the Figure 1B construction is connected to an impedance analyzer 4 to which can be connected an arbitrary or predetermined measuring frequency. The impedance analyzer 4 is connected to the computer 5 for calculation or control, and a printer 6 and the display 7 are connected to the computer 5.

Measurement is carried out by introducing the liquid sample into the cell 2 or 3 and measuring the impedance in the region of the resonant frequency of the piezo-electric resonator 1. More definitely, the impedance is measured in the following way. Since there is a resonant frequency at a value between the frequencies that provide the maximum and minimum values of the susceptance as the imaginary number of the admittance, the maximum and minimum values of the susceptance are determined by frequency scanning, and the conductance and the susceptance are measured by equidistant frequencies between these frequencies. The data of the conductance and susceptance are processed by the least square method of the circle to obtain the centre of this circle, and the frequency on such a circle that exhibits the same susceptance value as the susceptance value at the centre is obtained from an approximation to a polynomial equation of the susceptance and the measuring frequency, so that the frequency thus obtained is used as the resonant frequency. The difference between this resonant frequency,and the resonant frequency that is obtained in the same way but when there is no liquid in contact with the piezo-electric resonator 1, is used as ΔF.

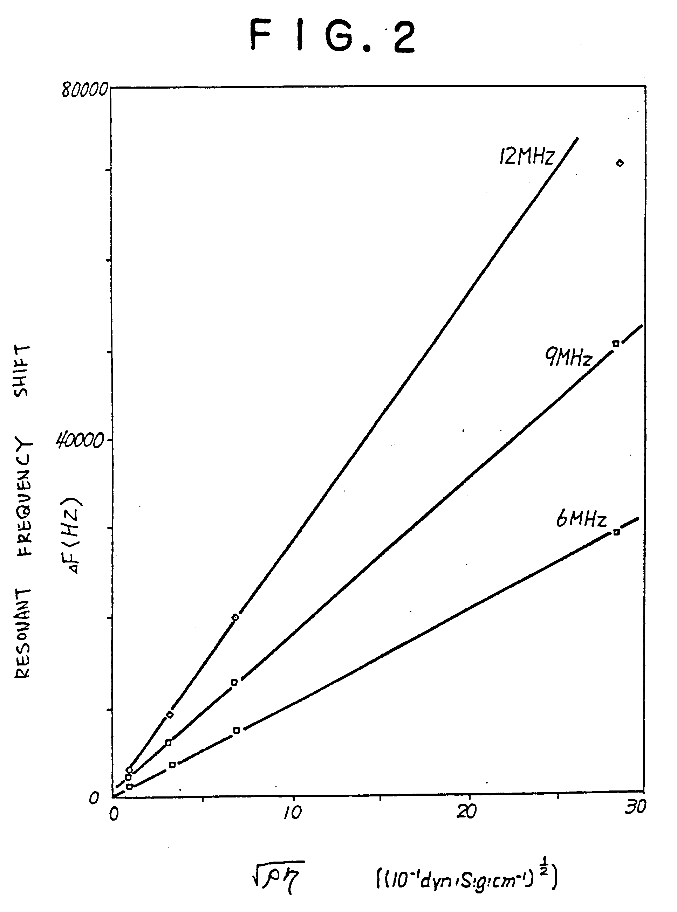

The frequency change ΔF was determined for each of a number of water-glycerol mixtures ranging from 100% water to 100% glycerol using 6 MHz, 9MHz and 12 MHz AT-cut piezo-electric crystals and using a cell 2 of the type shown in Figure 1A wherein one of the sides of the piezo-electric crystal was in contact with the liquid, at the temperature being 25°C, The results are shown in Figure 2. As shown in Figure 2, it will be understood that a linear relationship exists between ΔF and √ρ̅η̅.

When automatic setting was effected by a computer within the impedance measurement range employed, it was shown that the resonant frequency could be calculated within one minute for both the impedance measurement and the calculation time.

When the amount of the sample liquid was changed, the change of ΔF was extremely small and was negligible. In the case of the cell shown in Figure 1A, it was demonstrated that the measurement could be carried out satisfactorily even when the amount of the sample liquid was below 0.1 mℓ.

Furthermore, measurement could be carried out by directly immersing the piezo-electric crystal 1 into the liquid without using a cell.

When the measuring voltage was 0.01 V, 0.1 V and 1 V, respectively, it was found that ΔF was not dependent on the measuring voltage.

The resonant frequency can be measured by another method in which the frequency is determined at which the absolute value of the impedance or the resistance as the real number component becomes minimal, but the method referred to above can provide more accurate results because the said other method is susceptible to measurement error and to the influence of a parallel capacitor in the equivalent circuit of the piezo-electric crystal.

In another viscosity measuring system which may be employed in carrying out the present invention, the viscosity of a liquid is measured by bringing a liquid into contact with one, or both, of two electrodes of a piezo-electric resonator 31, measuring the resonant frequency of the piezo-electric resonator 31 while in contact with the liquid, and determining the difference between the said resonant frequency and the resonant frequency of the piezo-electric resonator 31 in air in order to determine the viscosity of the liquid. This viscosity measuring system consists of the piezo-electric crystal resonator 31, a cell 32 or 33 for holding the liquid which contacts the surface of the piezo-electric resonator 31, an oscillator circuit 34, a frequency measuring device or frequency counter 35, a data monitor device or computer 36 and a recording/display device such as a printer 37 or display 38. Viscosity measurement in accordance with the present example is carried out in the following sequence. First, a liquid sample is introduced into the cell 32 or 33 and is brought into contact with the piezo-electric resonator 31 so as to measure the oscillation frequency of the resonator 31 at this time. The difference of this oscillation frequency from that of the resonator 31 when in air is called ΔF. Since this ΔF value has a linear relationship with √ρ̅η̅ ρ:density, η: viscosity), viscosity is measured by utilizing this relationship.

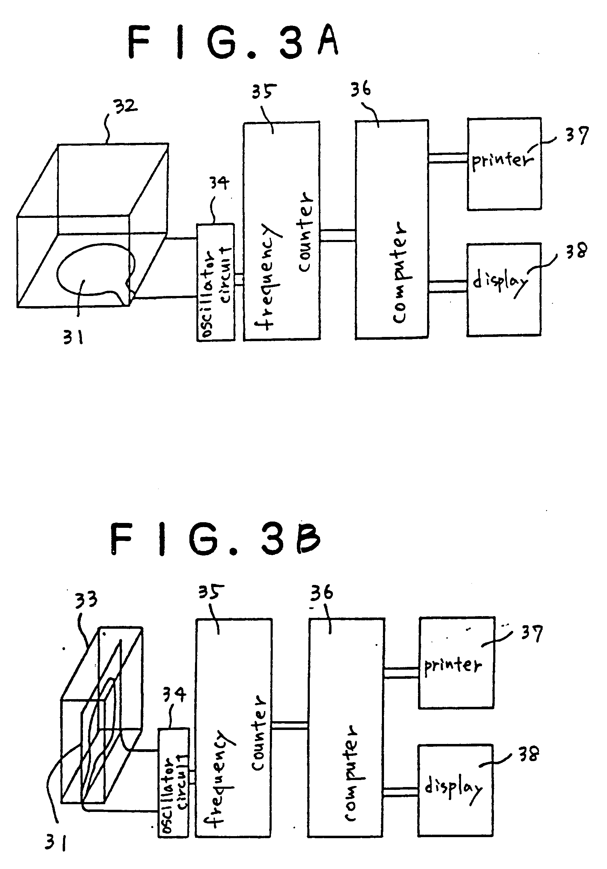

Figures 3A and 3B show schematically the viscosity measuring system in accordance with this example. In Figure 3A, the piezo-electric resonator 31 is fixed to the bottom of the cell 32 so that one of the sides of the piezo-electric resonator 31 is in contact with a liquid in the cell 32. Alternatively, as shown in Figure 3B, the resonator 31 may be mounted in the middle of the cell 33 so that opposite sides of the resonator 31 are in contact with the liquid in the cell 33. The piezo-electric resonator 31 in either the Figure 1A or Figure 1B construction is connected to the oscillator circuit 34. The oscillator circuit 34 is connected to the frequency counter 35 and further to the computer 36 for monitoring data. The printer 37 and the display 38 are connected to the computer 36.

Measurement was carried out by introducing a liquid sample into the cell 32 or 33, measuring the oscillation frequency of the resonator 31 therein, and obtaining the difference ΔF between this oscillation frequency and the oscillation frequency of the resonator 31 when there is no liquid 32 or 33.

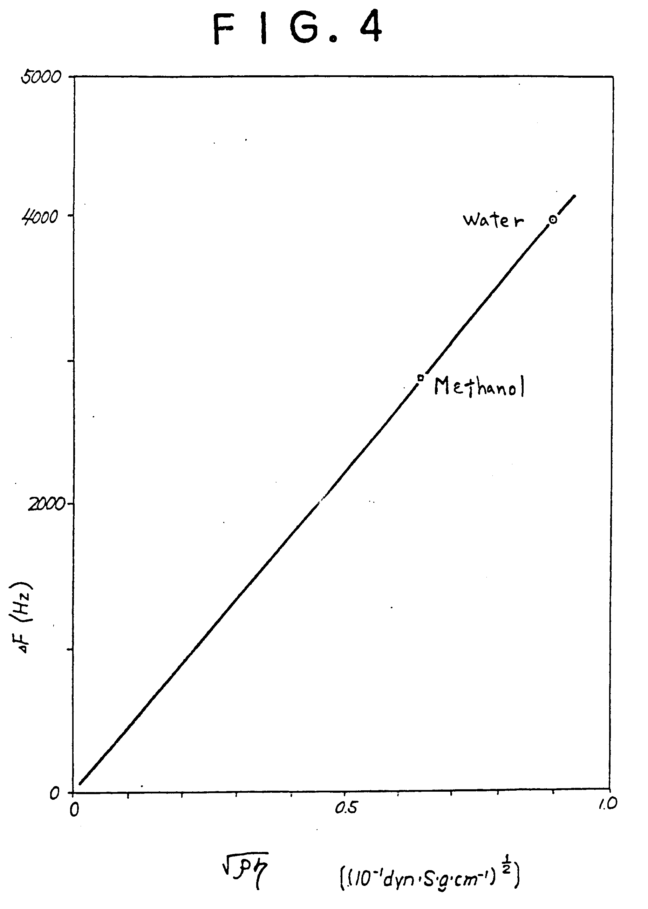

The frequency change was determined by using a 9 MHz AT cut piezo-electric crystal and a cell 32 of the type shown in Figure 3A wherein one of the sides of the crystal was in contact with the liquid. The liquid was maintained at 30°C and was a water-methanol mixture. The results are shown in Figure 4. As shown in Figure 4, it will be understood that a linear relationship exists between ΔF and √ρ̅η̅ .

When the amount of the sample liquid was changed, the change of ΔF was extremely small and was negligible. In the case of the cell shown in Figure 3A, it was demonstrated that the measurement could be carried out satisfactorily even when the amount of sample liquid was below 0.1ℓ .

Furthermore, measurement could be carried out by directly immersing the piezo-electric crystal in the liquid without using the cell.

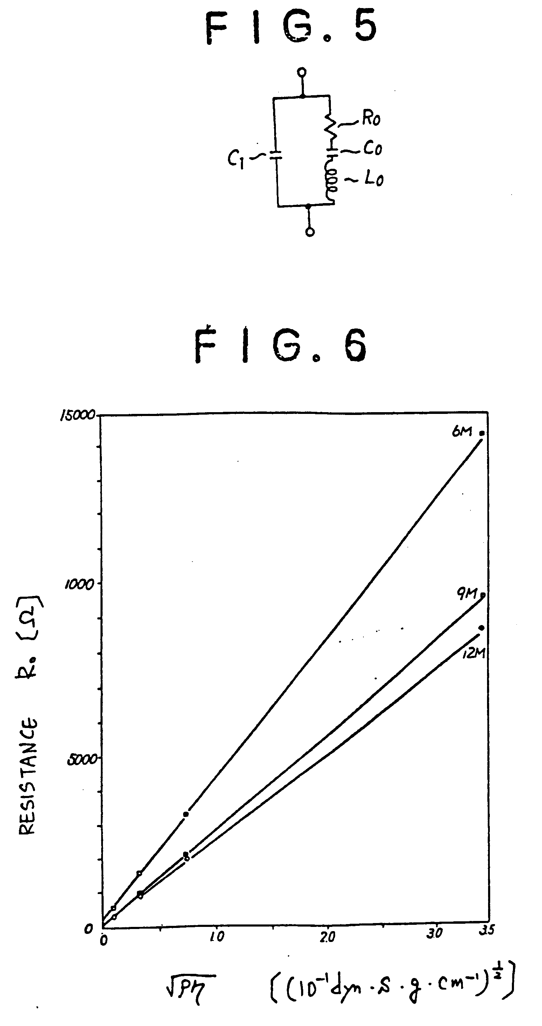

In a further viscosity measuring system which may be employed in carrying out the present invention, a liquid is brought into contact with one or both of the two electrodes of the piezo-electric resonator 1, and the viscosity of the liquid is determined by determining the value of the resistance component in a device comprising an inductance Lo (Figure 5), a capacitance Co and a resistance Ro connected in series with one another in equivalent circuit constants of a piezo-electric crystal. This viscosity measuring system comprises the piezo-electric resonator 1, the cell 2 or 3 for holding a liquid which is in contact with the surface of the piezo-electric resonator 1, a measuring circuit or impedance analyzer 4 for measuring the impedance at a frequency in the region of the resonant frequency of the piezo-electric resonator 1, a calculation unit or computer 5 for calculating the equivalent circuit constants for the measured data and a data display/recording device 6, 7. The viscosity measuring system of the present example makes it possible to measure the viscosity of even a small amount of a liquid sample within a short period and with a high level of accuracy.

Viscosity measurement by the present system is carried out in the following sequence.

First, a liquid sample is introduced into the cell 2 or 3 and is brought into contact with the piezo-electric crystal resonator 1. The impedance of this piezo-electric crystal resonator 1 is measured within a frequency range on both sides of the resonant frequency of the resonator 1 while the latter is in contact with the liquid. At this time, if conductance and susceptance, as the real and imaginary components of the admittance which is the inverse number of the impedance, are plotted on X - Y axes, they describe a circle. The value of the resistance Ro (referred to below as the "deficit resistance") in the equivalent circuit of the piezo-electric crystal shown in Figure 5 can be obtained by determining the diameter of this circle by the least square method and then obtaining its inverse number. Since √ρ̅η̅ (ρ : density, η : viscosity) exhibits a linear relationship, the viscosity can be determined by utilizing this relationship.

The properties of the piezo-electric resonator 1 and the operation of the resonator 1 in the present analyzer are illustrated as follows.

The piezo-electric resonator 1 may be constituted by a quartz or other crystal resonator or other device having a piezo-electric property. When a voltage of a frequency near the resonant frequency is applied to it, the piezo-electric resonator 1 causes mechanical vibration of the liquid sample. When the piezo-electric resonator 1 is in contact with the liquid, a resistance force acts between the liquid and the surface of the piezo-electric resonator 1, though this force is extremely small. If the mechanical vibration of the piezo-electric resonator 1 is considered in association with its electrical vibration, the resistance coefficient of this mechanical resistance can be considered in association with the electrical resistance. Therefore, the resistance Ro is considered to be a value which reflects the friction factor on the surface of the piezo-electric crystal and the √ρ̅η̅ of the sample liquid can be determined from the working curve that is prepared in advance.

As will be understood from the above, the viscosity measuring system in accordance with the present example is the same as that shown in Figures 1A and 1B.

Measurement is carried out by introducing the liquid sample into the cell and measuring the impedance in the region of the resonant frequency of the piezo-electric crystal. More definitely, the impedance is measured in the following way. Since there is a resonant frequency having a value between the maximum and minimum values of the susceptance as the imaginary number of the admittance, the maximum and minimum values of the susceptance are determined by frequency scanning, and the conductance and the susceptance are measured by equidistant frequencies between these frequencies. The data of the conductance and susceptance are processed by the least square method of the circle to obtain the diameter of the circle, and its inverse number is used as the Ro value.

### Application to endotoxin analysis

An endotoxin concentration was determined by the gelation of Limulus Amebocyte Lysate (LAS) using the measuring system described above.

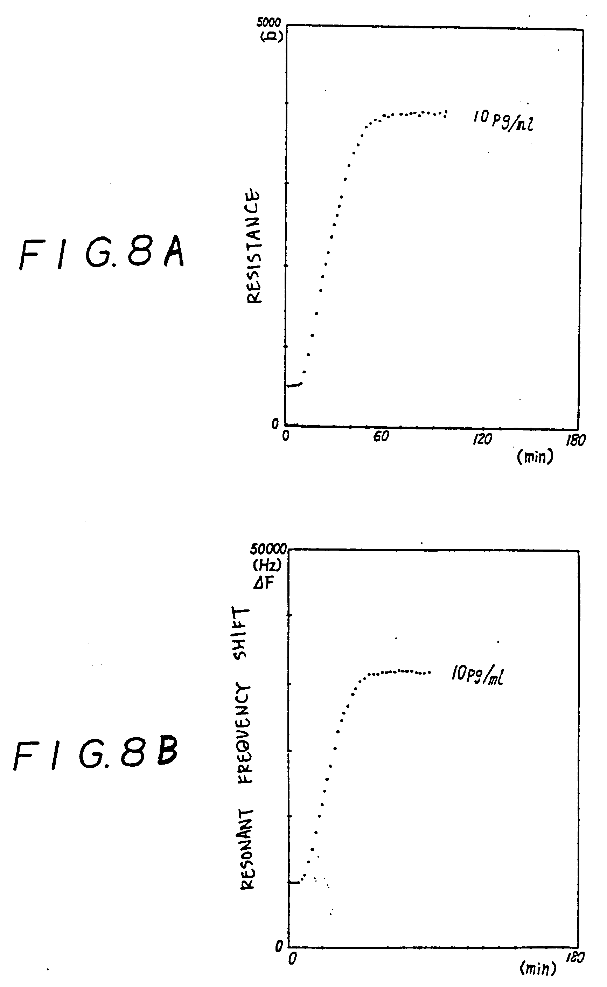

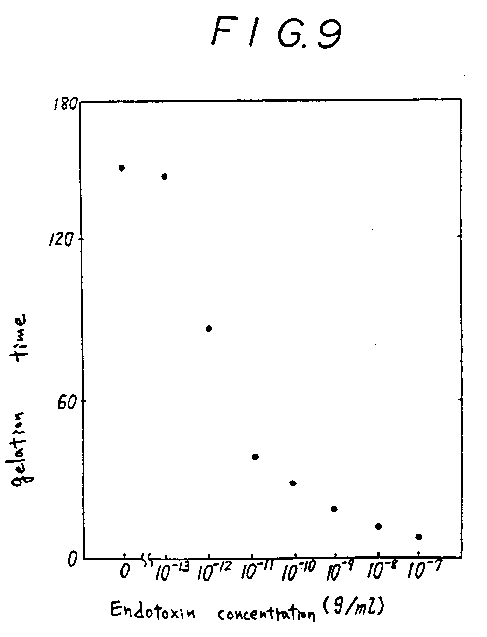

After 0.2 mℓ of a sample liquid and a freeze-dry product of Limulus Amebocyte Lysate were mixed, the mixture was put in a piezo-electric crystal cell and, immediately thereafter, the deficit resistance and the change of the resonant frequency were measured continuously. The relationship between the time and the deficit resistance and between the time and the resonant frequency change were measured for a sample containing 10 pg/mℓ of endotoxin by a 9 MHz AT-cut piezo-electric crystal and the results are shown in Figures 8A and 8B, respectively. It will be understood from Figure 8A that the resistance and therefore the viscosity increased with the gelation reaction time and became constant with the end of the gelation reaction. Figure 9 shows the relationship between the endotoxin concentration and the gelation time, and demonstrates that the measuring system of the present invention can detect the endotoxin concentration.

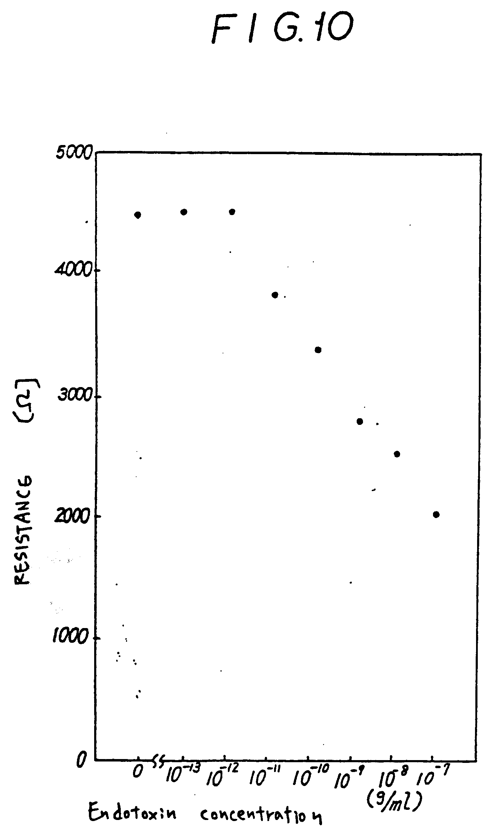

In addition to the viscosity change, the system of the present invention can be used for measuring an adsorption reaction. This was demonstrated by the fact that adsorption of albumin from an aqueous albumin solution could be traced by a piezo-electric resonator from a continuous change of the resonant frequency of the resonator. Therefore, if the adsorption reaction and the gelation reaction occur simultaneously, the rate of the gelation reaction can be estimated not only from the gelation time but also from the value of the deficit resistance and the change of the resonant frequency of the resonator after the end of gelation. The adsorption reaction proceeds simultaneously in the measurement of endotoxin, too, and Figure 10 shows the value of the deficit resistance with respect to the endotoxin concentration after the end of gelation.

### Example

A gelation reaction is measured in accordance with the present example by introducing a piezo-electric crystal to the bottom of a well type cell, placing a sample solution in the cell and determining the gelation time from the change of the oscillation frequency of the piezo-electric crystal. Furthermore, the frequency change at the time of the gelation reaction is amplified by adding solid fine particles into the sample solution.

The present example may involve the use of at least an oscillation circuit, a frequency measuring device and a data processing unit in addition to a piezo-electric resonator.

A piezo-electric crystal is a device which utilizes a piezo-electric property. When connected to an oscillation circuit, the piezo-electric crystal oscillates and its surface can cause vibration of any material in contact therewith. The material will, however, influence this vibration and will result in a change of the oscillation frequency.

Accordingly, if a change of the oscillation frequency with a gelation reaction is measured, the oscillation frequency changes with the progress of the reaction and the end of the change is observed with the completion of the gelation reaction. The gelation time can be measured by measuring the change of this oscillation frequency.

Furthermore, if solid fine particles are suspended in the sample, the fine particles settle to the surface of the piezo-electric crystal at the stage where gelation has not yet been complete and the oscillation frequency changes. When the gelation is complete, however, the fine particles are entrapped in the gel so that the change of the oscillation frequency due to sedimentation of the fine particles stops. In consequence, the frequency change at the time of the gelation reaction can be amplified.

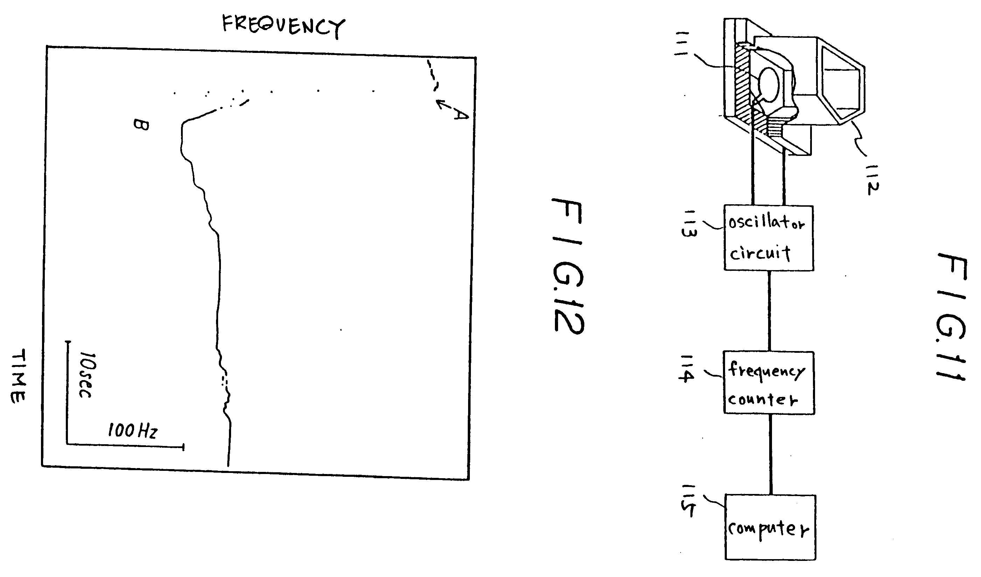

The viscosity measuring system used in the present example is shown in Figure 11.

In Figure 11, an AT-cut piezo-electric resonator 111 is fixed to a cell 112 so that the piezo-electric resonator 111 serves as the bottom surface of the cell 112 and is connected to an oscillation circuit 113. The oscillation circuit 113 is connected to a frequency counter 114, which is in turn connected to a computer 115 for monitoring and calculating data.

### The determination of a fibrinogen concentration

A fibrinogen concentration was measured in the following way. First, a 20 NIH/mℓ of an aqueous thrombin solution (0.2 mℓ, 20°C) containing 8 µg/mℓ of polybrene was prepared and mixed with 0.2 mℓ of an aqueous fibrinogen solution that had been put in advance into the cell and incubated at 37°C. Figure 12 shows the result of measurement of the change of the oscillation frequency at this time with respect to 500 mg/dℓ of fibrinogen. In Figure 12, the point A indicates the time at which the aqueous thrombin solution was mixed and the point B indicates the point where gelation was complete and the oscillation frequency became constant. The time difference between these points A and B was calculated automatically by the computer 115 to obtain the gelation time.

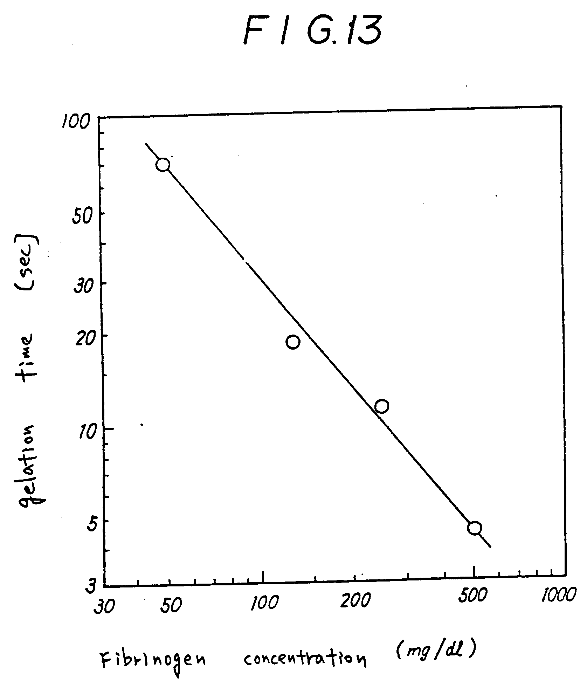

Figure 13 shows the result of a study on the correlation between the fibrinogen concentration and the gelation time by adding alumina particles (diameter 5 µm, 1 wt %). It can be seen from Figure 13 that the fibrinogen concentration and the gelation time have a substantially linear relationship and are in good agreement with the result obtained by the conventional measurement method. The measurement was similarly possible when µm alumina particles were used. The measurement could be carried out also satisfactorily when the amount of the alumina particles was below 10 wt%. The measurement by the addition of the alumina particles was extremely effective in relation to overcoming the influence of temperature change on the system.

Furthermore, the measurement described immediately above is possible even when the sample quantity is as small as 20 µℓ. Thus the gelation reaction time can be measured accurately even with a trace amount of a sample.

## Claims

1. A method of measuring the viscosity of a liquid comprising employing a piezo-electric resonator (1;31;111) to produce a response which is related to the said viscosity of the liquid and employing calculation means (4,5;34,35,36;113,114,115) to calculate the said viscosity of the liquid from the said response characterised in that the progress of a gelation reaction in the said liquid which involves a viscoelastic change is determined by contacting the resonator (1;31;111) with the liquid, adding solid particles to the liquid to amplify a variation of a resonator characteristic which varies in accordance with gelation of the liquid, and monitoring the resonant frequency shift from the resonant frequency measured in air while allowing the gelation reaction to proceed.

2. A method as claimed in claim 1 characterised in that the solid particles are alumina particles.

3. A method as claimed in claim 1 or 2 characterised in that the resistance of an electrical equivalent circuit of the piezo-electric resonator (1;31;111) is monitored while allowing the reaction to proceed.

4. A method as claimed in claim 1 wherein the contacting step comprises contacting the piezo-electric resonator (1;31;111) with a liquid comprised of a mixture of aqueous thrombin solution and aqueous fibrinogen solution to thereby enable a determination of fibrinogen concentration by gelating with thrombin.

5. A method as claimed in claim 1, wherein the contacting step comprises contacting the piezo-electric resonator (1;31;111) with a liquid comprised of a mixture of limulus amebocyte lysate and endotoxin to thereby enable a determination of endotoxin concentration by gelation of limulus amebocyte lysate.

## Patentansprüche

1. Verfahren zum Messen der Viskosität einer Flüssigkeit, umfassend Verwenden eines piezo-elektrischen Resonators (1;31;111) zum Erzeugen einer von der Viskosität der Flüssigkeit abhängenden Antwort und verwenden von Berechnungsmitteln (4,5;34,35,36;113,114,115) zum Berechnen der Viskosität der Flüssigkeit aus der Antwort,
**dadurch gekennzeichnet**, daß
der Fortgang einer mit einer visko-elastischen Veränderung einhergehenden Gelbildungsreaktion in der Flüssigkeit bestimmt wird, indem der Resonator (1;31;111) mit der Flüssigkeit in Kontakt gebracht wird, feste Partikel zu der Flüssigkeit zum Verstärken einer entsprechend der Gelbildung der Flüssigkeit variierenden Resonatorcharakteristikvariation gegeben werden und die Verschiebung der Resonanzfrequenz von der in Luft gemessenen Resonanzfrequenz überwacht wird, während es der Gelbildungsreaktion erlaubt wird fortzuschreiten.

2. Verfahren nach Anspruch 1, **dadurch gekennzeichnet**, daß die festen Partikel Aluminiumoxydpartikel sind.

3. Verfahren nach Anspruch 1 oder 2, **dadurch gekennzeichnet**, daß der Widerstand eines Ersatzschaltbilds des piezo-elektrischen Resonators (1;31;111) überwacht wird, während es der Reaktion erlaubt wird fortzuschreiten.

4. Verfahren nach Anspruch 1, bei welchem der Schritt des In-Kontakt-bringens ein In-Kontakt-bringen des piezo-elektrischen Resonators (1;31;111) mit einer ein Gemisch aus wässriger Thrombin-Lösung und wässriger Fibrinogen-Lösung umfassenden Flüssigkeit umfaßt, um dadurch eine Bestimmung der Fibrinogen-Konzentration durch Gelbildung mit Thrombin zu ermöglichen.

5. Verfahren nach Anspruch 1, bei welchem der Schritt des In-Kontakt-bringens ein In-Kontakt-bringen des piezo-elektrischen Resonators (1;31;111) mit einer ein Gemisch von Limulus-Amebozyt-Lysat und Endotoxin umfassenden Flüssigkeit umfaßt, um dadurch eine Bestimmung der Endotoxinkonzentration durch Gelbildung von Limulus-Amebozyt-Lysat zu ermöglichen.

## Revendications

1. Procédé de mesure de la viscosité d'un liquide, qui consiste à utiliser un résonateur (1; 31; 111) piézoélectrique pour produire une réponse qui est reliée à la viscosité du liquide et à utiliser des moyens de calcul (4, 5; 34, 36; 113, 114, 115) pour calculer la viscosité du liquide à partir de la réponse, caractérisé en ce qu'il consiste à déterminer la progression de la réaction de prise en gel du liquide, qui implique un changement visco-élastique, en mettant le résonateur (1; 31; 111) en contact avec le liquide, en ajoutant des particules solides au liquide pour amplifier une variation d'une caractéristique du résonateur qui varie en fonction de la prise en gel du liquide et en contrôlant le décalage de la fréquence de résonance à partir de la fréquence de résonance mesurée dans l'air, tout en laissant se dérouler la réaction de prise en gel.

2. Procédé suivant la revendication 1, caractérisé en ce que les particules solides sont des particules d'alumine.

3. Procédé suivant la revendication 1 ou 2, caractérisé en ce qu'il consiste à contrôler la résistance d'un circuit électrique qui est équivalent au résonateur (1; 31; 111) piézoélectrique, tout en laissant la réaction se dérouler.

4. Procédé suivant la revendication 1, dans lequel le stade de mise en contact consiste à mettre le résonateur (1; 31; 111) piézoélectrique en contact avec un liquide comprenant un mélange d'une solution aqueuse de thrombine et d'une solution aqueuse de fibrinogène pur permettre ainsi de déterminer la concentration de fibrinogène en le faisant se prendre en gel par de la thrombine.

5. Procédé suivant la revendication 1, dans lequel le stade de mise en contact consiste à mettre le résonateur (1; 31; 111) piézoélectrique en contact avec un liquide comprenant un mélange de lysat de limulus amébocyte et d'endotoxine pour permettre ainsi de déterminer la concentration d'endotoxine par prise en gel du lysat de limulus amébocyte.
